# FASCICULE DE BREVET EUROPEEN

(11) **EP 1 902 951 B1**
(45) Date de publication et mention de la délivrance du brevet: **07.10.2009**
(21) Numéro de dépôt: 07291018.5
(22) Date de dépôt: 16.08.2007
(51) Int. Cl.: B64D 27/18, B64D 29/06, F02K 3/06

(54) **Système propulsif à pylone intégré pour avion**
Antriebssystem mit integriertem Mast für Flugzeuge
Aircraft propulsion system with integrated pylon

(30) Priorité: 20.09.2006 FR 0608216
(43) Date de publication de la demande: 26.03.2008
(73) Titulaire: SNECMA, 75015 Paris (FR)
(72) Inventeur: Guibert, Thibaud Jean-Baptiste, 75012 Paris (FR); Lefort, Guillaume, 75012 Paris (FR); Tesniere, Marc Patrick, 91750 Champcueil (FR)
(74) Mandataire: Ramey, Daniel

(56) Documents cités:
- WO-A-93/02920
- FR-A- 2 873 988
- FR-A- 2 885 877
- GB-A- 2 021 696
- US-A- 2 943 449
- US-A- 3 848 832

## Description

L'invention concerne un système propulsif d'avion à moteur à turboréacteur à double flux, comprenant une nacelle portée par un carter intermédiaire du moteur et qui délimite un espace d'écoulement d'un flux secondaire autour du turboréacteur, ce flux secondaire étant destiné à fournir plus de 80% de la poussée.

Le moteur est en général accroché sous une aile ou à une partie du fuselage ou de l'empennage de l'avion, au moyen d'un pylône qui est une pièce très robuste et très lourde et qui est fixé au moteur en plusieurs points au travers de suspensions par lesquelles passent tous les efforts transmis entre le moteur et l'avion.

La fixation par pylône et suspensions se traduit aussi par un déport de la reprise de poussée par rapport à l'axe du moteur, qui entraîne une flexion globale de la ligne des carters du moteur. Le pylône est de plus fixé sur le moteur par des éléments qui traversent et obstruent partiellement la veine d'écoulement du flux secondaire à l'intérieur de la nacelle, ce qui amène à augmenter de façon correspondante les dimensions radiales de la nacelle alors que les constructeurs d'avion souhaiteraient plutôt diminuer ces dimensions, en particulier pour les moteurs à fort taux de dilution.

Le document GB 2 021 696 décrit une configuration analogue, dans laquelle un moteur à turboréacteur à double flux est accroché sous l'aile d'un avion par l'intermédiaire d'une structure de support semi cylindrique, le moteur étant fixé à cette structure par une tige de reprise de poussée reliée au corps du moteur et par deux points de raccordement reliés à un carter intermédiaire de ce moteur. Cette configuration des inconvénients semblables à ceux décrits précédemment, notamment en terme de poids et de flexion.

La présente invention a pour objet un système propulsif du type décrit ci-dessus, qui évite les inconvénients précités de la technique antérieure de façon simple, efficace et économique.

Elle propose à cet effet un système propulsif intégré comprenant un moteur d'avion à turboréacteur à double flux, une nacelle portée par un carter intermédiaire du moteur et qui délimite un espace annulaire d'écoulement d'un flux secondaire autour du turboréacteur, ce système étant caractérisé en ce que la nacelle comporte une partie cylindrique aval qui est rigide et comporte à son extrémité amont une bride annulaire de fixation sur au moins 180° de la circonférence externe du carter intermédiaire, cette partie cylindrique supportant et guidant le carter d'échappement du turboréacteur à son extrémité aval et comprenant également des moyens de fixation d'organes d'accrochage du moteur sur une partie de l'avion.

Cette partie cylindrique aval de la nacelle, appelée « OFS » (Outer Fixed Structure) dans la technique, a une rigidité qui lui permet une transmission d'efforts entre le moteur et l'avion. Sa fixation sur le carter intermédiaire du moteur lui permet de supporter intégralement le moteur et de supprimer les suspensions et en partie le pylône utilisé dans la technique antérieure, qui est remplacé par des moyens beaucoup plus légers d'accrochage à l'avion, ce qui se traduit par un gain de masse important. Cette fixation permet en outre de supprimer les points de reprise d'efforts locaux que l'on trouvait dans la technique antérieure et de répartir les efforts transmis sur une zone plus étendue, s'étendant sur au moins 180° autour de l'axe à la périphérie externe du carter intermédiaire et de préférence sur 360° et donc sur toute la périphérie externe du carter intermédiaire.

Selon une autre caractéristique de l'invention, les moyens de fixation des organes d'accrochage sur l'avion comprennent une poutre longitudinale rapportée ou formée en surépaisseur sur la partie cylindrique aval de la nacelle, et les organes d'accrochage sur l'avion sont formés par des bielles ou des tiges de liaison fixées à leurs extrémités sur cette poutre longitudinale et sur l'avion et constituant un système rigide et indéformable.

L'extrémité aval de la partie cylindrique est reliée au carter d'échappement du turboréacteur par des tiges et des organes de liaison autorisant une dilatation axiale et radiale du carter d'échappement lors du fonctionnement du moteur.

En variante, l'extrémité aval de la partie cylindrique précitée est reliée au carter d'échappement par l'intermédiaire d'un carter auxiliaire qui entoure le carter d'échappement et qui est relié par des bielles ou des tiges de liaison à la partie cylindrique aval de la nacelle.

Dans le mode de réalisation préféré de l'invention, la partie cylindrique aval de la nacelle comprend une ossature sur laquelle sont fixés des panneaux de carénage ou de capotage, formant une paroi externe de guidage du flux secondaire généré par la soufflante du moteur.

Une enveloppe cylindrique formant une paroi radialement interne de guidage du flux secondaire est avantageusement fixée à son extrémité amont sur le carter intermédiaire et peut être reliée au carter d'échappement par l'intermédiaire de moyens autorisant une dilatation axiale et radiale de ce carter d'échappement lors du fonctionnement du moteur.

Le moteur selon l'invention peut être équipé ou non d'un inverseur de poussée. Dans le premier cas, le flux secondaire généré par la soufflante est dévié, lors du fonctionnement de l'inverseur de poussée, à travers une partie ajourée de l'ossature de la partie cylindrique aval de la nacelle.

Les panneaux de carénage ou de capotage fixés sur cette ossature sont alors déplaçables en translation entre une position amont dans laquelle ils obturent cette partie ajourée de l'ossature et une position aval dans laquelle ils dégagent cette partie ajourée et autorisent le fonctionnement de l'inverseur de poussée.

L'invention concerne également une partie cylindrique aval de nacelle d'un moteur d'avion du type décrit ci-dessus, caractérisée en ce qu'elle comprend une poutre longitudinale externe comportant des moyens d'accrochage de moyens de fixation sur un avion et, à une extrémité, une bride annulaire de fixation sur au moins 180 degrés de la circonférence externe d'un carter intermédiaire du moteur.

Dans un mode de réalisation particulier de l'invention, cette partie cylindrique comprend une ossature dont une extrémité ajourée permet l'installation des grilles pour l'inverseur de poussée, et des panneaux de capotage mobiles pour ouvrir et fermer cette extrémité ajourée.

De façon générale, le moteur selon l'invention peut être fixé par les moyens précités sur une partie quelconque d'un avion, et par exemple sous une aile, sur une aile, sur une structure intégrée à l'aile, sur le fuselage ou sur l'empennage de l'avion.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 est une vue schématique de côté d'un système selon l'invention fixé sous l'aile d'un avion ;
- la figure 2 est une vue schématique en perspective d'une partie du système de la figure 1 ;
- la figure 3 est une vue schématique en perspective de l'ossature de la partie cylindrique aval de la nacelle, pour un moteur équipé d'un inverseur de poussée,
- la figure 4 est une vue schématique en perspective de la partie cylindrique aval de la nacelle fixée sur un carter intermédiaire ;
- la figure 5 est une vue schématique de côté de l'ensemble de la figure 4 après retrait d'un capot ;
- les figures 6 et 7 représentent deux variantes de réalisation de l'invention.

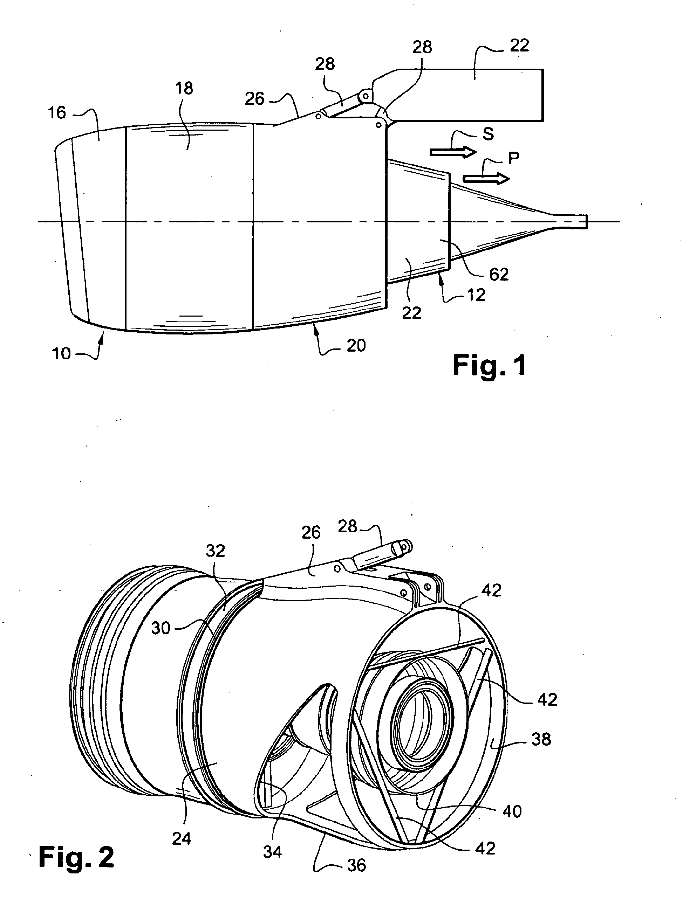

L'ensemble propulsif représenté schématiquement aux figures 1 et 2 comprend essentiellement une nacelle 10 de forme cylindrique qui entoure un turboréacteur 12 dont seule la partie arrière est visible en figure 1 et une roue de soufflante (non visible) montée à l'intérieur de la nacelle 10 à l'avant du moteur, cette roue de soufflante étant entraînée en rotation par la turbine du turboréacteur, d'une façon bien connue de l'homme du métier.

Pendant le fonctionnement du moteur, la soufflante génère un flux d'air secondaire qui s'écoule à l'intérieur de la nacelle 10 vers l'arrière autour du turboréacteur 12 et qui produit 80% de la poussée fournie par le moteur. Une partie de l'air entrant dans le moteur 10 alimente le compresseur d'entrée du turboréacteur, puis est mélangée à du carburant dans la chambre de combustion. Les gaz de combustion sortant de la chambre de combustion passent dans la turbine puis sont éjectés dans un carter d'échappement et sortent du turboréacteur comme indiqué par la flèche P en figure 1, où la flèche voisine S désigne la sortie du flux secondaire.

La nacelle 10 du moteur comprend une partie cylindrique amont 16 appelée manche d'entrée d'air, une partie cylindrique intermédiaire 18 formée de capots portés par le carter intermédiaire du moteur, et une partie cylindrique aval 20 appelée généralement « OFS » (Outer Fixed Structure) qui, selon l'invention, est une partie structurante transmettant les efforts et servant à la fixation du moteur 10 sur une structure porteuse 22 faisant partie d'une aile d'avion.

Cette partie cylindrique aval 20 comprend une ossature cylindrique rigide 24 (figure 2) qui comporte le long de sa génératrice supérieure une poutre longitudinale 26 qui peut être formée d'une pièce avec l'ossature 24 ou être rapportée sur celle-ci, cette poutre comportant des moyens de fixation des organes 28 d'accrochage du moteur sur l'avion, ces organes 28 étant constitués dans l'exemple représenté par des biellettes ou des tiges de liaison qui constituent un ensemble rigide et indéformable quand leurs extrémités sont fixées sur la poutre 26 et sur la structure porteuse 22.

L'ossature 24 de la partie structurale aval 20 de la nacelle comporte une bride annulaire amont 30 par laquelle elle est fixée sur une bride annulaire correspondante externe d'un carter intermédiaire 32 du moteur, ce carter intermédiaire comprenant, d'une façon connue de l'homme du métier, une partie annulaire interne cylindrique qui entoure le compresseur du turboréacteur et une partie annulaire cylindrique externe associée à la nacelle 10, les deux parties annulaires cylindriques du carter intermédiaire étant en général reliées entre elles par des bras radiaux tubulaires permettant également le passage de servitudes.

L'ossature cylindrique 24 de la partie structurante aval de la nacelle comporte de larges ouvertures latérales 34 d'accès au turboréacteur, ces ouvertures étant de forme triangulaire dans l'exemple de la figure 2 et s'étendant sur un peu plus de 90° autour de l'axe du moteur à partir d'un montant longitudinal inférieur 36 de l'ossature, qui est diamétralement opposé à la poutre longitudinale 26.

L'extrémité arrière ou aval de l'ossature 24 forme un anneau 38 qui entoure le carter d'échappement 40 du turboréacteur et qui supporte ce carter au moyen de biellettes ou tiges de liaison 42 disposées en triangle équilatéral et formant des cordes à l'intérieur de l'anneau 38, ces tiges de liaison 42 coopérant dans leur partie médiane avec le carter d'échappement par l'intermédiaire de moyens connus formant des patins de centrage et de glissement, qui autorisent une dilatation axiale qui peut être d'environ 10 à 15mm et une dilatation radiale qui peut être d'environ 4 à 5mm du carter d'échappement 40 pendant le fonctionnement du moteur.

La poutre longitudinale 26 de l'ossature cylindrique 24 de la partie structurante aval de la nacelle et les organes d'accrochage 28 permettent de fixer le moteur 10 sous l'aile de l'avion en répartissant les efforts statiques et dynamiques sur une partie au moins de la circonférence externe du carter intermédiaire 32 du moteur, cette partie étant comprise entre 180° et 360° autour de l'axe du moteur et étant de préférence égale à 360°, c'est-à-dire que dans ce cas l'ossature cylindrique 24 de la partie cylindrique aval de la nacelle est fixée sur toute la circonférence externe du carter intermédiaire et que les efforts transmis entre le moteur et l'avion sont répartis sur toute cette circonférence.

On évite ainsi les problèmes de distorsion de carcasse que l'on rencontrait dans la technique antérieure et l'on évite également les problèmes liés à la flexion globale de la ligne des carters des moteurs, qui étaient dus au déport de la reprise de poussée sur l'avion par rapport à l'axe du moteur. On réduit également la masse de l'ensemble du moteur et de ses moyens d'accrochage sur l'avion, grâce à la suppression du pylône utilisé dans la technique antérieure, on simplifie l'ensemble des moyens d'accrochage du moteur sur l'avion et l'on supprime également les bifurcations imposées au flux secondaire à l'intérieur de la nacelle par les moyens qui servaient dans la technique antérieure à relier le turboréacteur au pylône.

Le moteur peut être fixé sous une aile comme représenté schématiquement en figure 1, mais il peut être également fixé en tout autre endroit approprié et par exemple au dessus de l'aile, ou sur le fuselage ou l'empennage de l'avion, le moteur pouvant également être intégré totalement ou partiellement dans l'aile.

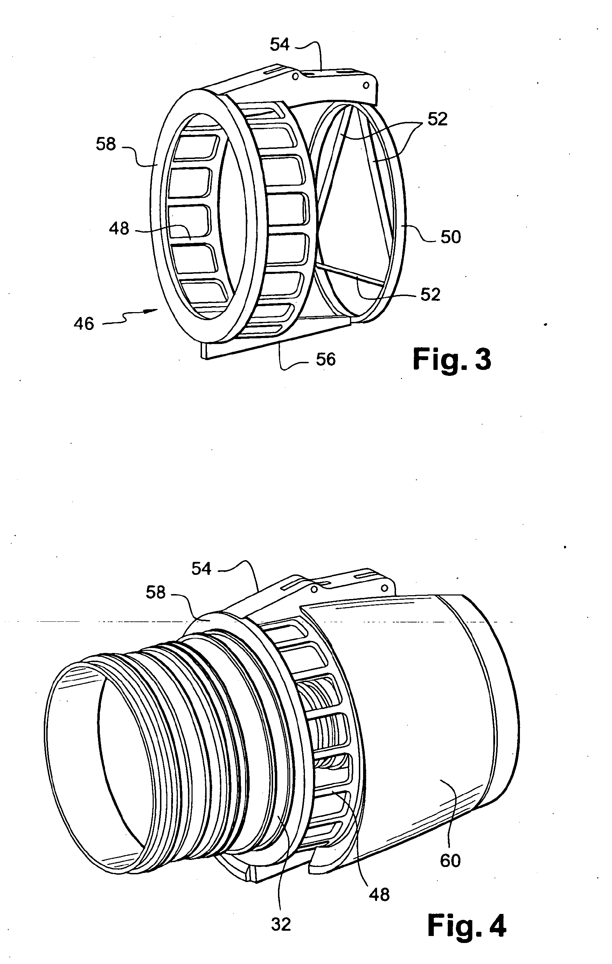

La variante de réalisation de l'invention représentée aux figures 3 à 5 concerne une application de l'invention à un moteur équipé d'un inverseur de poussée. Dans ce cas, la partie cylindrique aval 20 de la nacelle comprend une ossature 46 représentée en figure 3, qui est formée avec une partie annulaire amont 48 ajourée formant un treillis dans ou sur lequel se fixe une grille de sortie du flux secondaire dévié par l'inverseur de poussée, cette ossature 46 comprenant éventuellement un anneau aval 50 semblable à l'anneau aval de l'ossature cylindrique 24 de la figure 2 et comportant des biellettes ou tiges 52 de support du carter d'échappement du turboréacteur, montées en triangle équilatéral à l'intérieur de l'anneau 50. La partie annulaire amont 48 et l'anneau aval 50 sont reliés par deux montants longitudinaux 54 et 56 diamétralement opposés, le montant supérieur 54 formant une poutre longitudinale semblable à la poutre 26 de la figure 2 et servant à la fixation des moyens d'accrochage du moteur sur une partie de l'avion. Comme dans le premier mode de réalisation, l'ossature 46 comporte une bride annulaire amont 58 de fixation sur une bride annulaire externe correspondante du carter annulaire 32 du moteur. Des capots semi-cylindriques 60 sont montés sur l'ossature 46 de façon à pouvoir coulisser entre une position amont de fermeture de la grille de sortie de l'inverseur de poussée et une position aval de dégagement de cette grille de sortie permettant le fonctionnement de l'inverseur de poussée.

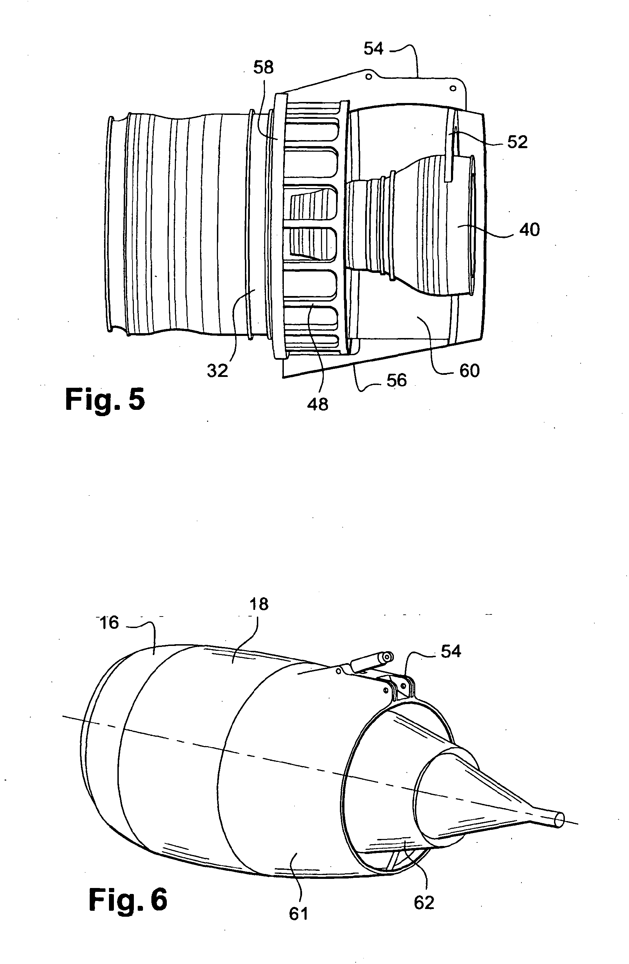

Dans une variante où l'on supprime l'anneau aval 50, les biellettes ou tiges 52 peuvent avoir une disposition autre que celle en triangle équilatéral représentée en figure 3, ces biellettes ou tiges de liaison 52 pouvant être radiales ou bien disposées en V comme représenté schématiquement en figure 5, où elles s'étendent entre l'extrémité aval de la poutre longitudinale 54 et la partie supérieure du carter d'échappement 40. Dans ce cas, les capots 60 sont remplacés par un capot 61 en forme de conduite cylindrique, représenté schématiquement en figure 6, qui est axialement coulissant pour permettre le fonctionnement de l'inverseur de poussée et faciliter la maintenance.

Dans une autre variante, ces biellettes ou tiges de liaison peuvent s'étendre entre l'anneau aval 50 de l'ossature 46 et un carter auxiliaire entourant le carter d'échappement 40 et fixé à celui-ci.

Dans une autre variante de réalisation, une enveloppe rigide sensiblement cylindrique formant une surface interne de guidage du flux secondaire, appelée généralement IFS (Inner Fixed Structure) dans la technique, telle que celle représentée en 62 en figures 1 et 6, est fixée à son extrémité amont sur une bride interne du carter intermédiaire et supporte le carter d'échappement à son extrémité aval, par l'intermédiaire de moyens permettant une dilatation axiale et radiale du carter d'échappement, en fonctionnement. Cette enveloppe rigide contribue à la réduction des distorsions de carcasse.

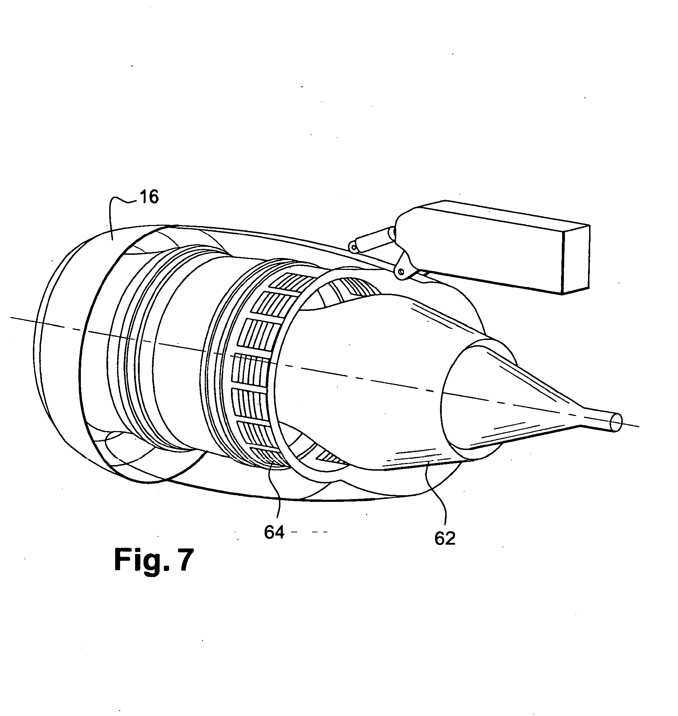

Dans une autre variante, les grilles 64 d'inverseur de poussée sont logées dans un carter intermédiaire allongé, en amont de la partie aval de nacelle selon l'invention comme représenté schématiquement en figure 7.

## Revendications

1. Système propulsif intégré comprenant un moteur à turboréacteur à double flux et une nacelle (10) portée par un carter intermédiaire (32) qui délimite un espace annulaire d'écoulement d'un flux secondaire autour du turboréacteur (12), **caractérisé en ce que** la nacelle comprend une partie cylindrique aval (20) qui est rigide et comporte à son extrémité amont une bride annulaire (30, 58) de fixation sur au moins 180° de la circonférence externe du carter intermédiaire (32), cette partie cylindrique (20) supportant et guidant le carter d'échappement (40) du turboréacteur à son extrémité aval et comprenant également des moyens (26) de fixation d'organes (28) d'accrochage du moteur sur une partie (22) de l'avion.

2. Système propulsif selon la revendication 1, **caractérisé en ce que** les moyens de fixation des organes d'accrochage (28) comprennent une poutre longitudinale (26) rapportée ou formée en surépaisseur sur la partie cylindrique aval (20) de la nacelle.

3. Système propulsif selon la revendication 2, **caractérisé en ce que** les organes d'accrochage du moteur sur l'avion comprennent des biellettes ou tiges de liaison (28) fixées à leurs extrémités sur la poutre longitudinale (26) et sur une partie (22) de l'avion.

4. Système propulsif selon l'une des revendications précédentes, **caractérisé en ce que** la partie cylindrique aval (20) de la nacelle constitue une paroi externe de guidage du flux secondaire.

5. Système propulsif selon l'une des revendications précédentes, **caractérisé en ce que** la bride annulaire amont (30) de la partie cylindrique aval de la nacelle est fixée sur 360° sur le carter intermédiaire (32).

6. Système propulsif selon l'une des revendications précédentes, **caractérisé en ce que** l'extrémité aval (38, 50) de la partie cylindrique aval de la nacelle est reliée au carter d'échappement (40) par des biellettes ou tiges de liaison (42, 52) et par des moyens autorisant une dilatation axiale et radiale du carter d'échappement.

7. Système propulsif selon la revendication 6, **caractérisé en ce que** l'extrémité aval de la partie cylindrique aval de la nacelle est reliée au carter d'échappement (40) par des biellettes ou tiges de liaison fixées aux moyens (54) de fixation des organes d'accrochage du moteur sur une partie de l'avion.

8. Système propulsif selon la revendication 7, **caractérisé en ce que** les biellettes ou tiges de liaison forment un V entre le carter d'échappement (40) et les moyens (54) d'accrochage des moyens de fixation du moteur sur l'avion.

9. Système propulsif selon l'une des revendications précédentes, **caractérisé en ce que** la partie cylindrique aval de la nacelle comporte une ossature (24) sur laquelle sont fixés des panneaux de carénage ou de capotage.

10. Système propulsif selon l'une des revendications précédentes, **caractérisé en ce que** la partie cylindrique aval de la nacelle comporte des ouvertures d'accès à des composants du turboréacteur, et des panneaux de fermeture de ces ouvertures.

11. Système propulsif selon l'une des revendications précédentes, **caractérisé en ce que** l'extrémité aval de la partie cylindrique aval de la nacelle supporte le carter d'échappement (40) par l'intermédiaire d'un carter auxiliaire entourant le carter d'échappement et relié par des bielles ou tiges de liaison à la partie cylindrique aval de la nacelle.

12. Système propulsif selon l'une des revendications précédentes, **caractérisé en ce qu'**une enveloppe cylindrique (62) formant une paroi radialement interne de guidage du flux secondaire est fixée à son extrémité amont sur le carter intermédiaire et est reliée à son extrémité aval au carter d'échappement par des moyens autorisant une dilatation axiale et radiale de ce carter d'échappement.

13. Système propulsif selon l'une des revendications précédentes, **caractérisé en ce qu'**il comprend des moyens d'inversion de poussée par déviation du flux secondaire à travers une structure ajourée de la partie cylindrique aval de la nacelle.

14. Système propulsif selon la revendication 13, **caractérisé en ce que** la partie cylindrique aval de la nacelle comprend des panneaux de capotage (60) mobiles entre une position de fermeture de la structure ajourée (48) et une position de dégagement de cette structure ajourée (48) permettant le fonctionnement de l'inverseur de poussée.

15. Système propulsif selon la revendication 8, **caractérisé en ce que** la partie cylindrique aval de la nacelle comprend un capot (61) formé par une conduite cylindrique et monté coulissant axialement pour permettre le fonctionnement d'un inverseur de poussée et faciliter la maintenance.

16. Système propulsif selon l'une des revendications 1 à 12, **caractérisé en ce qu'**il comprend des moyens d'inversion de poussée dont les grilles (64) sont logées dans le carter intermédiaire allongé, en amont de ladite partie cylindrique aval de la nacelle.

17. Système propulsif selon l'une des revendications précédente, **caractérisée en ce que** la partie cylindrique aval de la nacelle comprend une poutre longitudinale externe (26, 54) comportant des moyens de fixation des moyens d'accrochage du moteur sur un avion et, à une extrémité, une bride annulaire (30) de fixation sur au moins 180° de la circonférence externe d'un carter intermédiaire du moteur.

18. Système propulsif selon la revendication 17, **caractérisée en ce que** la partie cylindrique aval de la nacelle comprend une extrémité ajourée (48) formant un treillis dans ou sur lequel viennent se fixer les grilles de sortie d'un inverseur de poussée.

19. Système propulsif selon la revendication 18, **caractérisée en ce que** la partie cylindrique aval de la nacelle comprend des panneaux de capotage (60) montés mobiles entre une position de fermeture de l'extrémité ajourée (48) et une position de dégagement de cette extrémité ajourée.

## Claims

1. An integrated propulsion system comprising a bypass turbojet engine and a nacelle (10) borne by an intermediate case (32) which delimits an annular space for the flow of bypass air around the turbojet (12), **characterized in that** the nacelle comprises a downstream cylindrical part which is rigid and at its upstream end comprises an annular attachment flange (30, 58) over at least 180° of the external circumference of the intermediate case (32), this cylindrical part (20) supporting and guiding the turbojet exhaust case (40) at its downstream end and also comprising means (26) for attaching members (28) for securing the engine to part (22) of the airplane.

2. The propulsion system as claimed in claim 1, **characterized in that** the means (28) for attaching the securing members comprise a longitudinal beam (26) attached to or formed as an additional thickness of the downstream cylindrical part (20) of the nacelle.

3. The propulsion system as claimed in claim 2, **characterized in that** the members for securing the engine to the airplane comprise link rods (28) or connecting rods fixed at their ends to the longitudinal beam (26) and to part (22) of the airplane.

4. The propulsion system as claimed in one of the preceding claims, **characterized in that** the downstream cylindrical part (20) of the nacelle constitutes an external wall for guiding the bypass air.

5. The propulsion system as claimed in one of the preceding claims, **characterized in that** the upstream annular flange (30) of the downstream cylindrical part of the nacelle is fixed over 360° to the intermediate case (32).

6. The propulsion system as claimed in one of the preceding claims, **characterized in that** the downstream end (38, 50) of the downstream cylindrical part of the nacelle is connected to the exhaust case (40) by link rods or connecting rods (42, 52) and by means that allow axial and radial expansion of the exhaust case.

7. The propulsion system as claimed in claim 6, **characterized in that** the downstream end of the downstream cylindrical part of the nacelle is connected to the exhaust case (40) by link rods or connecting rods that are attached to the means (54) for attaching the engine securing members to part of the airplane.

8. The propulsion system as claimed in claim 7, **characterized in that** the link rods or connecting rods form a V between the exhaust case (40) and the means (54) for securing the engine attachment means to the airplane.

9. The propulsion system as claimed in one of the preceding claims, **characterized in that** the downstream cylindrical part of the nacelle comprises a framework (24) to which fairing or cowling panels are attached.

10. The propulsion system as claimed in one of the preceding claims, **characterized in that** the downstream cylindrical part of the nacelle comprises access openings providing access to components of the turbojet, and panels for closing these openings.

11. The propulsion system as claimed in one of the preceding claims, **characterized in that** the downstream end of the downstream cylindrical part of the nacelle supports the exhaust case (40) via an auxiliary case surrounding the exhaust case and connecting it by links or connecting rods to the downstream cylindrical part of the nacelle.

12. The propulsion system as claimed in one of the preceding claims, **characterized in that** a cylindrical shroud (62) forming a radially internal wall for guiding the bypass air is attached at its upstream end to the intermediate case and is connected at its downstream end to the exhaust case by means that allow axial and radial expansion of this exhaust case.

13. The propulsion system as claimed in one of the preceding claims, **characterized in that** it comprises means for reversing the thrust by diverting the bypass air through a perforated structure of the downstream cylindrical part of the nacelle.

14. The propulsion system as claimed in claim 13, **characterized in that** the downstream cylindrical part of the nacelle comprises cowling panels (60) that can move between a position in which they close the perforated structure (48) and a position in which they uncover this perforated structure (48) to allow the thrust reverser to operate.

15. The propulsion system as claimed in claim 8, **characterized in that** the downstream cylindrical part of the nacelle comprises a cowl (61) formed by a cylindrical duct mounted so as to slide axially to allow a thrust reverser to operate and to facilitate maintenance.

16. The propulsion system as claimed in one of claims 1 to 12, **characterized in that** it comprises thrust-reversal means the cascades (64) of which are housed in the elongate intermediate case upstream of said downstream cylindrical part of the nacelle.

17. The propulsion system as claimed in one of the preceding claims, **characterized in that** the downstream cylindrical part of the nacelle comprises an external longitudinal beam (26, 54) comprising means for attaching the means for securing the engine to an airplane and, at one end, an annular attachment flange (30) over at least 180° of the external circumference of an intermediate case of the engine.

18. The propulsion system as claimed in claim 17, **characterized in that** the downstream cylindrical part of the nacelle comprises a perforated end (48) forming a lattice into or onto which the outlet cascades of a thrust reverser are attached.

19. The propulsion system as claimed in claim 18, **characterized in that** the downstream cylindrical part of the nacelle comprises cowling panels (60) mounted so as to move between a position in which they close the perforated end (48)and a position in which they uncover this perforated end.

## Patentansprüche

1. Integriertes Antriebsystem, das ein Zweikreis-TL-Triebwerk und eine Gondel (10) umfasst, welche von einem Zwischengehäuse (32) gehalten wird, das einen um das Turboluftstrahltriebwerk (12) herum angeordneten ringförmigen Strömungsraum für einen Mantelstrom umgrenzt,
**dadurch gekennzeichnet,**
**dass** die Gondel einen hinteren, zylindrischen Teil (20) umfasst, der starr ausgeführt ist und an seinem vorderen Ende einen ringförmigen Befestigungsflansch (30, 58) über mindestens 180° der Außenumfangslinie des Zwischengehäuses (32) aufweist, wobei dieser zylindrische Teil (20) das Ausstoßgehäuse (40) des Turboluftstrahltriebwerks an seinem hinteren Ende hält und führt und ferner Mittel (26) zur Befestigung von Organen (28) zur Aufhängung des Triebwerks an einem Teil (22) des Flugzeugs aufweist.

2. Antriebsystem nach Anspruch 1,
**dadurch gekennzeichnet,**
**dass** die Befestigungsmittel der Aufhängungsorgane (28) einen Längsträger (26) umfassen, der an dem hinteren, zylindrischen Teil (20) der Gondel angebaut oder als Überdicke geformt ist.

3. Antriebsystem nach Anspruch 2,
**dadurch gekennzeichnet,**
**dass** die Aufhängungsorgane des Triebwerks an dem Flugzeug Pleuel oder Verbindungsstangen (28) umfassen, die mit ihren Enden an dem Längsträger (26) und an einem Teil (22) des Flugzeugs befestigt sind.

4. Antriebsystem nach einem der vorherigen Ansprüche,
**dadurch gekennzeichnet,**
**dass** der hintere, zylindrische Teil (20) der Gondel eine Außenwand zur Führung des Mantelstroms bildet.

5. Antriebsystem nach einem der vorherigen Ansprüche,
**dadurch gekennzeichnet,**
**dass** der vordere, ringförmige Flansch (30) des hinteren, zylindrischen Teils der Gondel über 360° an dem Zwischengehäuse (32) befestigt ist.

6. Antriebsystem nach einem der vorherigen Ansprüche,
**dadurch gekennzeichnet,**
**dass** das hintere Ende (38, 50) des hinteren, zylindrischen Teils der Gondel mit dem Ausstoßgehäuse (40) durch Pleuel oder Verbindungsstangen (42, 52) sowie durch Mittel verbunden ist, die eine axiale und radiale Dehnung des Ausstoßgehäuses zulassen.

7. Antriebsystem nach Anspruch 6,
**dadurch gekennzeichnet,**
**dass** das hintere Ende des hinteren, zylindrischen Teils der Gondel mit dem Ausstoßgehäuse (40) durch Pleuel oder Verbindungsstangen verbunden ist, die an den Mitteln (54) zur Befestigung der Aufhängungsorgane des Triebwerks an einem Teil des Flugzeugs befestigt sind.

8. Antriebsystem nach Anspruch 7,
**dadurch gekennzeichnet,**
**dass** die Pleuel oder Verbindungsstangen ein V zwischen dem Ausstoßgehäuse (40) und den Mitteln (54) zur Befestigung der Aufhängungsorgane des Triebwerks an dem Flugzeug bilden.

9. Antriebsystem nach einem der vorherigen Ansprüche,
**dadurch gekennzeichnet,**
**dass** der hintere, zylindrische Teil der Gondel ein Skelett (24) aufweist, an dem Verkleidungsplatten befestigt sind.

10. Antriebsystem nach einem der vorherigen Ansprüche,
**dadurch gekennzeichnet,**
**dass** der hintere, zylindrische Teil der Gondel Zugangsöffnungen zu Bauteilen des Turboluftstrahltriebwerks sowie Schließplatten für diese Öffnungen aufweist.

11. Antriebsystem nach einem der vorherigen Ansprüche,
**dadurch gekennzeichnet,**
**dass** das hintere Ende des hinteren, zylindrischen Teils der Gondel das Ausstoßgehäuse (40) über ein Zusatzgehäuse hält, welches das Ausstoßgehäuse umgibt und durch Pleuel oder Verbindungsstangen mit dem hinteren, zylindrischen Teil der Gondel verbunden ist.

12. Antriebsystem nach einem der vorherigen Ansprüche,
**dadurch gekennzeichnet,**
**dass** eine zylinderförmige Hülle (62), die eine radial innere Führungswand für den Mantelstrom bildet, mit ihrem vorderen Ende an dem Zwischengehäuse befestigt ist und an ihrem hinteren Ende mit dem Ausstoßgehäuse verbunden ist, und zwar durch Mittel, die eine axiale und radiale Dehnung dieses Ausstoßgehäuses zulassen.

13. Antriebsystem nach einem der vorherigen Ansprüche,
**dadurch gekennzeichnet,**
**dass** es Mittel zur Schubumkehr durch Umlenkung des Mantelstroms durch einen mit Öffnungen versehenen Aufbau des hinteren, zylindrischen Teils der Gondel aufweist.

14. Antriebsystem nach Anspruch 13,
**dadurch gekennzeichnet,**
**dass** der hintere, zylindrische Teil der Gondel Verkleidungsplatten (60) aufweist, die zwischen einer Schließstellung des mit Öffnungen versehenen Aufbaus (48) und einer Freigabestellung dieses mit Öffnungen versehenen Aufbaus (48), die den Betrieb der Schubumkehrvorrichtung ermöglicht, bewegbar sind.

15. Antriebsystem nach Anspruch 8,
**dadurch gekennzeichnet,**
**dass** der hintere, zylindrische Teil der Gondel eine Haube (61) aufweist, die von einer zylindrischen Leitung gebildet wird und axial gleitend angebracht ist, um den Betrieb einer Schubumkehrvorrichtung zu ermöglichen und die Wartung zu erleichtern.

16. Antriebsystem nach einem der Ansprüche 1 bis 12,
**dadurch gekennzeichnet,**
**dass** es Mittel zur Schubumkehr aufweist, deren Gitter (64) in dem länglichen Zwischengehäuse vor dem genannten hinteren, zylindrischen Teil der Gondel aufgenommen sind.

17. Antriebsystem nach einem der vorherigen Ansprüche,
**dadurch gekennzeichnet,**
**dass** der hintere, zylindrische Teil der Gondel einen äußeren Längsträger (26, 54) umfasst, der Mittel zur Befestigung der Aufhängungsorgane des Triebwerks an einem Flugzeug sowie an einem Ende einen ringförmigen Befestigungsflansch (30) über mindestens 180° der Außenumfangslinie eines Zwischengehäuses des Triebwerks aufweist.

18. Antriebsystem nach Anspruch 17,
**dadurch gekennzeichnet,**
**dass** der hintere, zylindrische Teil der Gondel ein mit Öffnungen versehenes Ende (48) umfasst, das ein Netzwerk bildet, in oder an dem die Austrittsgitter einer Schubumkehrvorrichtung befestigt werden.

19. Antriebsystem nach Anspruch 18,
**dadurch gekennzeichnet,**
**dass** der hintere, zylindrische Teil der Gondel Verkleidungsplatten (60) aufweist, die zwischen einer Schließstellung des mit Öffnungen versehenen Endes (48) und einer Freigabestellung dieses mit Öffnungen versehenen Endes bewegbar sind.
